# EUROPEAN PATENT SPECIFICATION

(11) **EP 1 490 165 B1**
(45) Date of publication and mention of the grant of the patent: **26.03.2008**
(21) Application number: 02723787.4
(22) Date of filing: 03.04.2002
(51) Int. Cl.: B01D 67/00, B01D 71/70, B01D 53/22, B01D 69/12

(54) **EPOXYSILICONE COATED MEMBRANES**
MIT EPOXYSILIKON BESCHICHTETE MEMBRANEN
MEMBRANES RECOUVERTES D'EPOXY-SILICONE

(43) Date of publication of application: 29.12.2004
(73) Proprietor: UOP LLC, Des Plaines, IL 60017 (US)
(72) Inventor: CHIOU, Jeffrey J., Des Plaines, IL 60017 (US)
(74) Representative: Hayes, Adrian Chetwynd
(86) International application number: PCT/US2002/010864
(87) International publication number: WO 2003/084651

(56) References cited:
- EP-A- 0 404 030
- EP-A- 0 581 542
- US-A- 4 279 717
- US-A- 5 650 453
- PATENT ABSTRACTS OF JAPAN vol. 0143, no. 50 (C-0744), 27 July 1990 (1990-07-27) & JP 02 126927 A (NOK CORP), 15 May 1990 (1990-05-15)
- DATABASE WPI Week 198640 Derwent Publications Ltd., London, GB; AN 1986-262911 XP002226097 & JP 61 192313 A ((MATU)MATSUSHITA ELEC IND CO LTD), 26 August 1986 (1986-08-26)
- PATENT ABSTRACTS OF JAPAN vol. 0120, no. 33 (C-472), 30 January 1988 (1988-01-30) & JP 62 183837 A (KOMATSU LTD), 12 August 1987 (1987-08-12)

## Description

### BACKGROUND OF THE INVENTION

This invention relates to semipermeable asymmetric membranes useful in selective separations of gases and liquids. Gas permeation may be defined as a physical phenomenon in which certain components selectively pass through a substance such as a membrane. A gas permeation process involves introducing a gas into one side of a module which is separated into two compartments by a permeable membrane. The purpose of a membrane in a gas permeation process is to act as a selective barrier, that is, to permit passage of some but not all components of a gaseous feed stream. Generally, in gaseous membrane separation processes, the separation is due to molecular interaction between gaseous components of the feed stream and the membrane. Because different components interact differently with the membrane, the transmission rates (permeation fluxes) are different for each component. US-A-4,130,403, discloses the use of cellulosic membranes in processes for the separation and removal of acid components from hydrocarbon gases.

Semipermeable asymmetric cellulosic "skinned" separation membranes formed by phase inversion and solvent exchange methods are known from US-A-3,133,132. Such membranes are characterized by a thin, dense, selectively semipermeable surface "skin" and a less dense void-containing, non-selective support region, with pore sizes ranging from large in the support region to very small proximate to the "skin". Such membranes have a serious shortcoming in that, in operation, fluxes decrease substantially over time. This decrease has been attributed to a collapse of some of the pores near the skinned surface of the membrane, resulting in an undue densification of the surface skin. One attempt at overcoming this problem has been the development of thin film composite ("TFC") membranes, comprising a thin selective skin deposited on a resilient porous support (Thin-Film Composite Membrane for Single-Stage Seawater Desalination by Reverse Osmosis" by R. L. Riley et al., Applied Polymer Symposium No. 22, pages 255-267 (1973)). Fabrication of TFC membranes that are free from leaks is difficult, and fabrication requires multiple steps and so is generally more complex and costly.

Asymmetric membranes may be formed from other polymers such as polysulfone, polyethersulfone, polyamide, polyimide, polyetherimide, cellulose nitrate, polyurethane, polycarbonate, polystyrene, etc. are also susceptible to flux decline and fabrication of asymmetric membranes from such other polymeric materials which are free of leaks is similar in difficulty and expense to producing TFC membranes.

One approach to overcoming the problem of leaks in asymmetric membranes has been the fabrication of an asymmetric gas separation membrane comprising a relatively porous and substantial void-containing selective "parent" membrane such as polysulfone or cellulose acetate that would have permselectivity were it not porous, wherein the parent membrane is coated with a material such as a polysiloxane or a silicone rubber in occluding contact with the porous parent membrane, the coating filling surface pores and other imperfections comprising voids (see US-A-4,230,463). The coatings of such coated membranes, especially coatings polysiloxane coatings, are degraded by solvents inherently present in the gaseous feed streams of common acid gas separations leading to leaching that permits flux decline or low selectivity, US-A-4,877,528 attempts to overcome the flux decline characteristic of coated cellulosic membranes by grafting or bonding an asymmetric cellulosic semipermeable membrane and a polysiloxane. by reacting a polysiloxane containing one or more hydroxyl-reactive functional groups with the hydroxyl groups of the cellulose polymer of the cellulosic membrane, or by reacting a polysiloxane containing one or more vinyl alkynyl, or free radical-forming groups with the cellulosic substrate. In both cases, non-crosslinked, covalent bonds bond the grafting the polysiloxane to the cellulosic membrane. Applying substrates as dispersions in a solvent system reduces the viscosity sufficiently to facilitate coating. Such prior art post-treatments may provide gas separation membranes which exhibit improved selectivity; however, only a highly inert solvent, toward the membrane polymer, will not induce change or damage the morphology of the membrane and reduce transmembrane flux. Heat is typically applied to substrates coated with silicones for evaporative removal of solvent and to thermally induced curing. This heating may damage the underlying substrate.

JP02126927 discloses a gas separating thin film af a mixture of polytrimethylsilylpropyne with polyorganosiloxane formed on the surface of a porous support of cellulose acetate, polypropylene etc ..

JP62183837 discloses a both terminal epoxy group modified polysiloxane compound and a single terminal amino group modified polysiloxane which are reacted to prepare a high-molecular compound. It further discloses a gas permeable membrane formed from the high molecular compound.

Fluorosilicones are used as conformal coatings because of their resistance to solvent swelling and degradation. Photo-curable silicones for low modulus cured coatings typically consist of linear silicone molecules that have photo-reactive centers widely separated by non-functional polysiloxane segments so that a low cross-link density results upon silicone curing. Because they consist almost entirely of polydimethylsiloxane segments, such photo-curable silicone polymers are incompatible with onium ionic photo-catalysts. This incompatibility results in an inefficient and/or slow photo-cure.
Therefore, a membrane post-treatment is needed which improves selectivity but does not change or damage the membrane, or cause the membrane to lose performance with time. Gas separation membranes desirably have a high permeability to gases that requires maintaining the effective membrane portion as thin as possible without introducing imperfections or defects. that reduce the selectivity of the membrane. In the past, these membrane defects have been sealed or reduced to improve gas separation membrane performance.This invention provides an asymmetric membrane that can be inexpensively made by conventional single casting techniques, yet has a high selectivity and a stable flux rate which essentially do not decline in use.

### SUMMARY OF THE INVENTION

The present invention provides a method for preparing an expoxysilicone coated asymmetric membrane as defined in claim 1.

The present invention is a method for preparing a fluid separation membrane comprising an asymmetric membrane substrate which is directly coated with a radiation curable silicone coating to provide improved stable performance over a wider range of temperature than previously known materials. The asymmetric membrane substrate includes cellulosic membranes and membranes formed from other polymers. More specifically, the membranes of the present invention exhibit essentially no loss in selectivity following extraction with a non-polar solvent such as hexane or loss in flux rates. The improvement of the epoxysilicone coated asymmetric cellulosic membranes of the present invention over conventional asymmetric cellulose membranes in maintaining selectivity is dramatic and exhibits essentially no loss of silicone and exhibits a highly stable flux rate. By the term "stable flux rate", it is meant that the flux declines less than 30 percent, and more particularly the flux rate declines less than 20 percent over a typical operating period. Furthermore, unlike silicone coated membranes of the prior art, the fluid separation membranes of the present invention are coated with a UV curable epoxysilicone coating which is not chemically bonded to the membrane substrate. Epoxysilicone coated porous cellulosic membranes produced according to the present invention exhibit essentially no loss in selectivity and essentially no loss in siloxane content even following hexane extraction.

In one embodiment, the present invention is a method for the production of a fluid separation membrane comprising directly coating a porous asymmetric membrane, such as cellulose acetate, with a dilute solution of the epoxysilicone resin and an onium ionic photo-catalyst dissolved in a non-polar, organic solvent to uniformly disperse the epoxysilicone resin over the asymmetric membrane, evaporating the non-polar organic solvent, and crosslinking the epoxysilicone resin by subjecting the epoxysilicone resin to ultra-violet or electron beam radiation. According to the invention, the method comprises casting a porous asymmetric membrane layer; drying the porous asymmetric membrane layer to form a dry porous asymmetric membrane; uniformly coating the dry porous asymmetric membrane with a coating comprising a dilute epoxysilicone solution to form a coated membrane; and irradiating and drying the coated membrane to produce the epoxysilicone coated membrane.

In a further embodiment, the present invention is a process for the separation of a permeable component from a feed stream comprising the permeable component and natural gas. The process comprises passing the feed stream at effective conditions to a membrane separation zone containing a porous asymmetric membrane layer coated with a uniform UV-curable epoxysilicone coating and recovering a permeate stream enriched in the permeable component relative to the feed stream, and a non-permeate stream depleted in the permeable component relative to the feed stream.

### DETAILED DESCRIPTION OF THE INVENTION

Acidic components, hydrogen sulfide, and carbon dioxide may be removed from a gaseous light hydrocarbon or a mixture of light hydrocarbons such as natural gas by the use of a suitable gas permeable membrane. In addition, a gas permeable membrane may be used to produce a relatively pure carbon dioxide gas which may be utilized in enhanced oil recovery processes such as the miscible flooding of carbonate reservoirs. The light hydrocarbons from which CO₂ and/or H₂S can be removed by the method of the instant invention include lower aliphatic hydrocarbons such as methane, ethane, propane, butanes, pentanes, hexanes and to a lesser extent, aliphatic hydrocarbons having more than eight carbon atoms and mixtures thereof. Some feed streams may contain small amounts of aromatic components such as benzene and toluene. Natural gas streams which can be treated in accordance with the instant invention typically contain at least 2 percent CO₂. Natural gas streams can comprise from 1 ppm-vol to 98 volume percent H₂S. Some natural gases may contain up to 98 percent CO₂. Gases containing high concentrations of CO₂ cannot be economically processed by conventional processes to produce a substantially CO₂-rich stream such as one containing 95 percent CO₂. Thus, the use of membrane technology is particularly attractive when the CO₂ concentration ranges between 2 and 70 volume percent in natural gas or similar light hydrocarbon stream.

Generally, organic or organic polymers mixed with inorganics are used to prepare the porous separation membrane. Typical polymers suitable for the porous separation membrane according to the invention can be substituted or unsubstituted polymers and may be selected from polysulfones; poly(styrenes), including styrene-containing copolymers such as acrylonitrilestyrene copolymers, styrene-butadiene copolymers and styrene-vinylbenzylhalide copolymers; polycarbonates; cellulosic polymers, such as cellulose acetate-butyrate, cellulose propionate, ethyl cellulose, methyl cellulose, nitrocellulose, etc.; polyamides and polyimides, including aryl polyamides and aryl polyimides; polyethers; poly(arylene oxides) such as poly(phenylene oxide) and poly(xylene oxide); poly(esteramide-diisocyanate); polyurethanes; polyesters (including polyarylates), such as poly(ethylene terephthalate), poly(alkyl methacrylates), poly(acrylates), poly(phenylene terephthalate), etc.; polysulfides; polymers from monomers having alpha-olefinic unsaturation other than mentioned above such as poly (ethylene), poly(propylene), poly(butene-1), poly(4-methyl pentene-1), polyvinyls, e.g., poly(vinyl chloride), poly(vinyl fluoride), poly(vinylidene chloride), poly(vinylidene fluoride), poly(vinyl alcohol), poly(vinyl esters) such as poly(vinyl acetate) and poly(vinyl propionate), poly(vinyl pyridines), poly(vinyl pyrrolidones), poly(vinyl ethers), poly(vinyl ketones), poly(vinyl aldehydes) such as poly(vinyl formal) and poly(vinyl butyral), poly(vinyl amides), poly(vinyl amines), poly(vinyl urethanes), poly(vinyl ureas), poly(vinyl phosphates), and poly(vinyl sulfates); polyallyls; poly(benzobenzimidazole); polyhydrazides; polyoxadiazoles; polytriazoles; poly (benzimidazole); polycarbodiimides; polyphosphazines; etc., and interpolymers, including block interpolymers containing repeating units from the above such as terpolymers of acrylonitrile-vinyl bromide-sodium salt of para-sulfophenylmethallyl ethers; and grafts and blends containing any of the foregoing. Typical substituents providing substituted polymers include halogens such as fluorine, chlorine and bromine; hydroxyl groups; lower alkyl groups; lower alkoxy groups; monocyclic aryl; lower acyl groups and the like.

Selection of the porous separation membrane for the present multi-component membrane may be made on the basis of the heat resistance, solvent resistance, and mechanical strength of the porous separation membrane, as well as other factors dictated by the operating conditions for selective permeation, as long as the coating and porous separation membrane have the prerequisite relative separation factors in accordance with the invention for at least one pair of gases. The porous separation membrane is preferably at least partially self-supporting, and in some instances may be essentially self-supporting. The porous separation membrane may provide essentially all of the structural support for the membrane, or the multi-component membrane may include a structural support member which can provide little, if any, resistance to the passage of gases.

When permeable components are acid components removed from a hydrocarbon mixture such as natural gas, one module, or at least two in parallel service, or a series of modules may be utilized to remove the acid components. For example, when one module is utilized, the pressure of the feed gas may vary from 275 kPa to 2.6 MPa (25 to 4000 psig). The differential pressure across the membrane can be as low as 0.7 bar or as high as 145 bar (10 psi or as high as 2100 psi) Differential pressures greater than 145 bar (2100 psi) may rupture the membrane. A differential pressure of at least 7 bar (100 psi) is preferred since lower differential pressures may require more modules, more time and more compression of intermediate product streams. Preferably, the effective operating temperature of the membranes of the present invention will range from -50° to 80°Cmore preferably, -20° to 70°C, and most preferably, will be less than 70°C. The upper limiting temperature is thought to be that temperature at which the membrane deteriorates. Some membranes such as plastics and resins exhibit better permeability characteristics at higher temperatures; however, in the preferred cellulose acetate membrane of the present invention showed a surprising improvement over conventionally produced cellulosic membranes at operating temperatures below 50°C. As operating temperature was reduced below 50° to-10°C, the membranes of the present invention exhibited an almost 20 percent improvement in selectivity over conventional cellulosic membranes. The selectivity of a membrane (also called separation factor) in separating two gas species A and B from each other is defined as the ratio of their gas permeances in that membrane. The selectivity (A/B) can be obtained by measuring the gas permeance of each gas in pure gas state or in mixed gas state. In most applications, the membrane is made to maximize both permeance and selectivity (see US-A-5,702,503).

Radiation curable protective coatings are typically highly functional reactive substances which cure to yield highly cross-linked, glossy, and hard coatings. Silicone coatings of this type frequently contain so-called Q functional siloxane groups (SiO_{4/2}) in their structure. Such Q containing silicones are generally referred to as resins to distinguish them from silicone fluids which are usually linear, consisting of largely of repeating D groups (R₂ SiO_{2/2}, where R usually is methyl). Highly reactive organofunctional silicone Q resins are typically very viscous semi-solids or friable solids at room temperature and thus not readily coatable because they are not liquid. Indeed, when functionalized with polar organic moieties that are reradiation cross-linkable, even linear silicone fluids can become highly viscous and therefore difficult to coat using standard coating techniques.

Epoxy-functional silicones such as taught in US-A-5,650,453 and US-A-4,279,717, when combined with certain compatible iodonium cationic photo-catalysts, are known to be useful for producing UV curable epoxysilicone release coatings. Epoxysilicone release coatings allow high speed processing with minimal energy expenditures. If the viscosity of the coating composition exceeds 1,000 centistokes (cstk) at room temperature, the absence of solvent in the composition renders them difficult to apply, particularly if a thin coating on the order of 1 gm/m² is desired. The viscosity constraint imposed by processing equipment thus imposes constraints on the molecular weight of the silicone composition and on linearly functionalized photo-curable silicone fluids such as epoxysilicones. Additional constraints are provided by the need for photo-catalyst miscibility or solubility, the need for a rapid photo-cure response, and good release performance. While a high epoxy content in an epoxysilicone, as epoxy functional groups on a linear silicone molecule, tend to promote onium photo-catalyst compatibility with the silicone and a rapid photo-cure, a low epoxy content is required for premium or low force release characteristics.

Controlled release is an additional aspect of photo-curable epoxysilicone release performance. Compositions containing both epoxy functional and phenol functional silicones as taught in US-A-5,138,012, and Q resins containing epoxysilicones as taught in US-A-5,360,833 and US-A-5,369,205 provide a so-called controlled release. Controlled release refers to a controllable and predictable release force that may be varied from very easy to very tight depending on the desired application.

The present invention employs an ultra-violet curable silicone coating composition comprising:
(a) an epoxy functional silicone selected from the group consisting of
   MDₓ D^{E}_{y} Q_{z} Tᵤ D^{Rf}ⱼD^{A}ₖ D^{P}₁(D'(CH(R)CH₂O)ₘ)ₙ D^{B}ₚ M,
   M^{E}Dₓ D^{E}_{y} Q_{z} Tᵤ D^{Rf}ⱼ D^{A}ₖ D^{P}₁(D'(CH(R)CH₂O)ₘ)ₙ D^{B}ₚM^{E},
   M^{E}Dₓ D^{E}_{y} Q_{z} Tᵤ D^{Rf}ⱼ D^{A}ₖ D'₁(D'(CH(R)CH₂O)ₘ)ₙ D^{B}ₚ M,
   and mixtures thereof;
   where
   M=(CH₃)₃SiO_{1/2},
   M^{E} =(C₆ H₉ O(CH₂)₂)(CH₃)₂ SiO_{1/2},
   D=(CH₃)₂ SiO_{2/2},
   D'=(CH₃)₃ SiO_{2/2},
   D^{E} =(C₆ H₉ O(CH₂)₂)(CH₃)SiO_{2/2},
   D^{R}_{f} =(CF₃ CH₂ CH₂)(CH₃)SiO_{2/2},
   D^{A} =((HO)(C₂ H₃)C₆ H₉ (CH₂)₂)(CH₃)SiO_{2/2},
   D^{P} =((HO)(C₆ H₄)(CH₂)₃)(CH₃)SiO_{2/2},
   D^{B} =((C₆ H₅ COO)(HO)(C₆H₉)(CH₂)₂)(CH₃)SiO_{2/2},
   Q=SiO_{4/2},
   T=(CH₃)₃ SiO_{3/2},
   where R is selected from the group consisting of hydrogen, methyl, and ethyl, and where j, k, l, m, n, p, x, y, z, and u are positive integers and k, l, n, p, u and z may be zero and wherein said epoxy functional silicone has a viscosity ranging from 100 to 100,000 centistokes at 25°C.; and
(b) an effective amount of a bis(dodecylphenyl) iodonium salt photocatalyst, the photocatalyst being selected from the salts of the group of acids consisting of hexafluoroantimonic acid hexafluoroarsenic acid, hexafluorophosphoric acid, tetrafluoroboric acid, tetra(perfluorophenyl)boric acid and mixtures thereof. The subscripts on the various components of the epoxyfunctional silicones may be varied at will within the constraints already listed, i.e. either non-zero or optionally zero such that the viscosity is within the defined range.

It is preferred that the epoxysilicone resin be combined with an effective amount of the onium photocatalyst, wherein the effective amount of the onium photocatalyst in an epoxysilicone UV-curable mixture is a ratio ranging from 100:1 to 100:10 by weight of the epoxysilicone resin to the onium photocatalyst, and more particularly in a ratio ranging from 100:1 to 100:4 by weight of the epoxysilicone resin to the photocatalyst. It is preferred to dilute epoxysilicone UV-curable mixture in a non-polar organic solvent such as hexane or heptane and mixtures thereof in a concentration of from 0.1 to 10 weight percent to provide an effective coating. The epoxysilicone/catalyst mixture is applied to the surface of the base cellulose membrane in a dilute solution of hexanes, heptanes and mixtures thereof in a concentration of the epoxysilicone/catalyst mixture ranging from 0.1 to 10 weight percent. The hexanes and heptanes can be any combination of normal and iso-paraffins and may be present in any ratio of hexanes to heptanes ranging from 1:10 to 10:1.

Epoxysilicones which are UV curable are commercially available from various sources, for example, GE Silicones of Waterford, New York makes and sells a number of UV-photocurable epoxysilicones under the denominations UV9315, UV9430, and UV9400. An example of the onium photo-catalyst compatible with such epoxysilicones is made and sold by GE Silicones of Waterford, New York under the denomination UV9380C. A preferred formulation for achieving a cellulosic membrane coating of the controlled release epoxysilicone mixture would include 100 parts UV-photocurable epoxysilicone and 1-4 parts onium photo-catalyst.

The asymmetric membrane will be further described in relation to a an asymmetric cellulosic membrane, although the techniques for coating the asymmetric membrane with the UV-curable epoxysilicone coating and the benefits of the present invention will also apply to asymmetric membranes produced from other polymers such as polysulfone, polyethersulfone, polyamide, polyimide, polyetherimide, cellulose nitrate, polyurethane, polycarbonate, polystyrene. The asymmetric cellulosic membrane is a thin porous membrane having a skin thickness of less than 10,000 angstroms, preferably, a skin thickness between 200 and 1000 angstroms, and more preferably, a skin thickness between 300 and 500 angstroms. The permeability constant of a particular gas through a particular membrane may be determined experimentally by contacting the gas with a membrane of known area and thickness, recording the differential pressure across the membrane and measuring the rate of permeation, or diffusion, of the gas through the membrane. Generally, in order to separate one gaseous component from another, the ratio of the permeability constants of the more permeable component to the other component should be at least five, wherein the selectivity (α) is defined as the relative permeance of an acid gas component such as CO₂ to the permeance a hydrocarbon component such as methane (CH₄), and the permeance of a component is the gas flow of a mixture of CO₂ and CH₄, divided by the area of the membrane surface times the differential partial pressures of the component between the feed pressure and the permeate pressure.

The term "asymmetric cellulosic membrane" in the context of the instant invention includes cellulose ester membranes such as cellulose acetate, cellulose diacetate, cellulose triacetate, cellulose propionate, cellulose butyrate, cellulose cyanoethylate, cellulose methacrylate and mixtures thereof may be utilized. These membranes may be flat film or hollow fiber. A particularly preferred membrane comprises cellulose acetate. The base cellulosic membrane layer can be made to any degree of initial porosity as characterized by its initial selectivity, which may range from 0.1 to 15. The base cellulosic membrane layer of the present invention has an initial selectivity of less than 5, and more preferably having a selectivity between 0.5 and 3, and most preferably having a selectivity between 1 and 2. It was found that in order to make a stable coated membrane, the concentration of the epoxysilicone/catalyst content in the dilute solvent was dependent upon the initial porosity of the base membrane layer. When the selectivity of the base cellulosic membrane was greater than 5, the concentration of the epoxysilicone/catalyst in the solvent solution ranged from 0.1 to 5 weight percent, and more preferably from 0.1 to 2 weight percent. When the basic cellulosic membrane layer was very porous, that is having a selectivity less than 5, it was discovered that the concentration of the epoxysilicone resin plus the catalyst in the dilute solvent solution was critical to the production of an acceptable membrane for gas separation applications. and a concentration of epoxysilicone resin/catalyst in the dilute solvent less than 1 weight percent proved to be insufficient to block the defects in the base cellulosic membrane. Therefore, when the porous asymmetric layer comprises a selectivity less than 5, the dilute epoxysilicone solution should comprise a ratio of epoxysilicone mixture to solvent ranging from 2 to 6 parts per 100 parts weight and preferably ranging from 0.5 to 3 parts per 100 parts weight.

### EXAMPLES

### EXAMPLE I

A relatively porous cellulose acetate membrane having a CO₂/CH₄ selectivity of 1.6 was prepared in a conventional manner from a casting dope comprising, by approximate weight percentages, 8 percent cellulose triacetate; 8 percent cellulose diacetate, 47 percent dioxane, 20 percent acetone, 12 percent methanol, 2.4 percent lactic acid, 3.1 percent n-decane. A film was cast on a nylon web then gelled by immersion in a 2°C water bath for 10 minutes, and then annealed in a hot water bath at 80° to 90°C for 15 minutes. The resulting wet membrane was dried in air at a drying temperature between 60° and 70°C to remove water. The dry porous asymmetric cellulosic membrane was then coated with a dilute epoxysilicone solution containing 4 weight percent epoxysilicone (4 parts epoxysilicone portion to 96 parts silicone solvent). The silicone solvent comprised a 1:3 ratio of hexane to heptane; i.e., 24 parts hexane and 72 parts heptane. The epoxysilicone portion consisted of a mixture of 100 parts of epoxysilicone resin UV9315, and 3 parts by weight of the photocatalyst UV9380C, obtained from GE Silicones of Waterford, New York. The dilute epoxysilicone solution was placed in a trough and applied to the continuous web of cellulosic membrane by contacting the web with a stainless steel roller which picked up the dilute epoxysilicone solution and applied it uniformly to one side of the web. The epoxysilicone coating was exposed to a UV source for a period of 2 to 4 minutes at ambient temperature to cure the coating while the silicone solvent evaporated to produce the epoxysilicone coated membrane of the present invention.

### EXAMPLE II

A 3 inch (76 mm) diameter circle of the porous cellulose membrane web, or substrate, and a 3-inch diameter circle of the epoxysilicone coated membrane of Example I were evaluated for gas transport properties using a gas stream containing 10 volume percent CO₂/90 volume percent CH₄ at a feed pressure of 6.89 MPa (1015 psia). Table 1 shows a comparison of the CO₂ permeance rate and the selectivity (α) of uncoated base and the epoxysilicone coated membrane of the present invention.

**Table 1**

| **Gas Transport Properties** | | |
|---|---|---|
| **Material** | **CO₂ Permeance** | **Selectivity** |
| Porous Cellulose Base | 31.1 | 1.6 |
| Epoxysilicone Coated | 12.3 | 15.0 |

### EXAMPLE III

The gas transport properties of the epoxysilicone-coated membrane of the present invention were compared to conventionally prepared cellulose acetate membranes over a range of typical operating temperatures and pressures. A comparison of the gas transport properties of the epoxysilicone coated membrane of the present invention relative to gas transport properties of conventionally produced cellulose acetate membranes is shown in Table 2. Table 2 shows the relative ratio of performance of the membrane of the present invention as a ratio of the CO₂ rate and the ratio of the selectivity to the performance of the cellulose acetate membrane of the prior art at pressures ranging from 4.24 MPa (615 psia) to 7.69 MPa (1115 psia) for a gas stream containing 10 mole percent CO₂ and 90 mole percent methane. The membranes of the present invention exhibited a higher CO₂ permeance rate and a greater selectivity at essentially all conditions.

**Table 2**

| **Comparison of Gas Transport Properties with Conventional CA Membranes** | | |
|---|---|---|
| **10% CO₂ / 4.24MPa** | **Performance Ratio: Invention/Conventional** | |
| **Temp (°C)** | **CO₂ rate** | **Selectivity** |
| 50 | 1.30 | 1.01 |
| 30 | 1.36 | 1.03 |
| 10 | 1.48 | 1.04 |
| 0 | 1.51 | 1.11 |
| -10 | 1.68 | 1.19 |

| **10% CO₂ / 5.62MPa** | **Performance Ratio: Invention/Conventional** | |
|---|---|---|
| **Temp (°C)** | **CO₂ rate** | **Selectivity** |
| 50 | 1.51 | 0.96 |
| 30 | 1.65 | 1.00 |
| 10 | 1.78 | 1.09 |
| 0 | 1.89 | 1.17 |
| -10 | 1.98 | 1.26 |

| **10% CO₂ / 7.69MPa** | **Performance Ratio: Invention/Conventional** | |
|---|---|---|
| **Temp (°C)** | **CO₂ rate** | **Selectivity** |
| 50 | 1.41 | 0.96 |
| 30 | 1.51 | 1.05 |
| 10 | 1.49 | 1.20 |
| 0 | 1.58 | 1.28 |
| -10 | 1.67 | 1.24 |

### EXAMPLE IV

The stability of the epoxysilicone-coated membranes of the present invention was determined by exposing the epoxysilicone-coated membrane to extraction in a bath of hexane for a 19-hour period. Six 3-inch (76-mm) circles of the epoxysilicone membrane of the present invention were soaked in a glass jar containing 120 grams of hexane at ambient conditions and then dried in air. Gas transport properties were determined before and after the hexane extraction. Table 3 shows that there was essentially no change in the gas transport properties following extraction with hexane.

**Table 3**

| **Gas Transport Properties After Hexane Extraction** | | |
|---|---|---|
| Performance Ratio: Post-Extraction/Pre-Extraction | | |
| Weight (grams) | CO₂ rate | Selectivity |
| 2.45 | 0.96 | 0.99 |

### EXAMPLE V

Silicone-grafted membranes disclosed in US-A-4,877,528 comprising cellulosic semipermeable membranes which are the covalently bonded reaction product of an asymmetric cellulosic membrane and a polysiloxane chemically bonded thereto show a significant loss of selectivity an flux stability compared to the epoxysilicone coated membranes of the present invention. In Example 3 of US-A-4,877,528 in column 8, lines 7-17, it is stated that the silicone-grafted membranes exhibited a 50 percent loss of CO₂/CH₄ selectivity and a 55 percent loss of siloxane content following extraction with hexane, a non-polar solvent. Less than a 2 percent loss in selectivity was observed in Example IV for the epoxysilicone-coated membrane of the present invention. Table 4 shows the loss in selectivity of the prior art grafted membranes compared to the epoxysilicone coated membrane of the present invention. The membrane of the present invention exhibited essentially no loss of selectivity, or less than 2 percent, in a CO₂/methane separation following hexane extraction.

**Table 4**

| **Comparison to Grafted Membranes** | |
|---|---|
| | % Loss in CO₂ / CH₄ selectivity due to hexane extraction |
| US-A-4877828 (Example 3) | 50% |
| Present invention | 2% |

## Claims

1. A method for preparing an epoxysilicone coated asymmetric membrane, said method comprising:
a) casting porous asymmetric membrane layer;
b) drying the porous asymmetric membrane layer to form a dry porous asymmetric membrane;
c) uniformly coating the dry porous asymmetric membrane with a coating comprising a dilute epoxysilicone solution to form a coated membrane, wherein the dilute epoxysilicone solution comprises an epoxysilicone resin and an onium photocatalyst in a non-polar organic solvent in a concentration of from 0.1 to 10 weight per cent; and
d) irradiating using UV radiation and drying the coated membrane to produce the epoxysilicone membrane.

2. The method of claim 1 wherein the porous asymmetric membrane layer comprises a cellulosic membrane selected from the group consisting of cellulose acetate, cellulose diacetate, cellulose triacetate, cellulose propionate, cellulose butyrate, cellulose cyanoethylate, cellulose methacrylate and mixtures or
comprises a polymer selected from the group consisting of polysulfone, polyethersulfone, polyamide, polyimide, cellulose nitrate, polyurethane, polycarbonate, polystyrene, and mixtures thereof.

3. The method of claim 1 wherein the porous asymmetric membrane layer comprises a skin thickness less than 1000 angstroms and the porous asymmetric membrane layer comprises a selectively between 0.5 and 15, wherein the selectivity of a membrane in separating two gas species A and B from each other is defined as the ratio of their gas permeances in that membrane.

4. The method of claim 1 wherein the dilute epoxysilicone solution comprises an epoxysilicone mixture of epoxysilicone resin and onium photocatalyst comprising a ratio of 1-4 parts onium photocatalyst to 100 parts epoxysilicone resin.

5. A membrane separation process using the membrane prepared according to any of claims 1 to 4 comprising a porous asymmetric membrane layer having a uniform epoxysilicone coating for the separation of a permeable component from a feed stream comprising the permeable component and natural gas, said process comprising passing the feed stream at effective conditions to a membrane separation zone containing a porous asymmetric membrane layer coated with a uniform UV-curable epoxysilicone coating and recovering a permeate stream enriched in the permeable component relative to the feed stream, and a non-permeate stream depleted in the permeable component relative to the feed stream.

6. The process of claim 5 wherein the effective conditions include a separation temperature below 70°C.

7. The process of claim 6 wherein the permeable component is selected from the group consisting of carbon dioxide, hydrogen sulphide, water, and mixtures thereof.

## Patentansprüche

1. Verfahren zur Herstellung einer Epoxysilicon-beschichteten asymmetrischen Membran, wobei das Verfahren umfasst:
a) Gießen einer porösen asymmetrischen Membranschicht;
b) Trocknen der porösen asymmetrischen Membranschicht, um eine trockene, poröse, asymmetrische Membran zu erzeugen;
c) gleichmäßiges Beschichten der trockenen, porösen, asymmetrischen Membran mit einer Beschichtung, die eine verdünnte Epoxysilicon-Lösung umfasst, um eine beschichtete Membran zu erzeugen, wobei die verdünnte Epoxysilicon-Lösung ein Epoxysilicon-Harz und einen Onium-Photokatalysator in einem nichtpolaren organischen Lösemittel in einer Konzentration im Bereich von 0,1 bis 10 Gew.-% enthält; und
d) Bestrahlen unter Verwendung von UV-Strahlung und Trocknen der beschichteten Membran, um die Epoxysilicon-Membran zu erzeugen.

2. Verfahren nach Anspruch 1, wobei die poröse asymmetrische Membranschicht eine Cellulosemembran umfasst, die unter Celluloseacetat, Cellulosediacetat, Cellulosetriacetat, Cellulosepropionat, Cellulosebutyrat, Cellulosecyanoethylat, Cellulosemethacrylat und Gemischen ausgewählt wird, oder die ein Polymer umfasst, das unter Polysulfon, Polyethersulfon, Polyamid, Polyimid, Cellulosenitrat, Polyurethan, Polycarbonat, Polystyrol und Gemischen davon ausgewählt wird.

3. Verfahren nach Anspruch 1, wobei die poröse asymmetrische Membranschicht eine Hautdicke von weniger als 1000 Angström aufweist und die poröse asymmetrische Membranschicht eine Selektivität im Bereich von 0,5 bis 15 aufweist, wobei die Selektivität einer Membran für die Trennung von zwei Gassorten A und B voneinander als der Quotient ihrer Gasdurchlässigkeiten in dieser Membran definiert ist.

4. Verfahren nach Anspruch 1, wobei die verdünnte Epoxysilicon-Lösung ein Epoxysilicon-Gemisch aus Epoxysilicon-Harz und einem Onium-Photokatalysator umfasst, das ein Verhältnis von 1-4 Teilen Onium-Photokatalysator auf 100 Teile Epoxysilicon-Harz aufweist.

5. Membrantrennverfahren unter Verwendung der Membran, die gemäß einem der Ansprüche 1 bis 4 hergestellt wurde, die eine poröse asymmetrische Membranschicht umfasst, die eine gleichmäßige Epoxysilicon-Beschichtung hat, für die Abtrennung einer permeablen Komponente aus einem Einsatzstrom, der die permeable Komponente und Erdgas umfasst, wobei das Verfahren das Zuführen des Einsatzstroms unter effektiven Bedingungen zu einer Membrantrennzone, die eine poröse asymmetrische Membranschicht enthält, die mit einer gleichmäßigen UV-härtbaren Epoxysilicon-Beschichtung beschichtet ist, und das Gewinnen eines Permeatstroms, der mit der permeablen Komponente angereichert ist, bezogen auf den Einsatzstrom, und eines Nichtpermeatstroms, in dem die permeable Komponente abgereichert ist, bezogen auf den Einsatzstrom, umfasst.

6. Verfahren nach Anspruch 5, wobei die effektiven Bedingungen eine Trenntemperatur unterhalb von 70 °C einschließen.

7. Verfahren nach Anspruch 6, wobei die permeable Komponente unter Kohlendioxid, Schwefelwasserstoff, Wasser und Gemischen davon ausgewählt wird.

## Revendications

1. Procédé pour la préparation d'une membrane asymétrique revêtue d'époxysilicone, ledit procédé comprenant les étapes consistant à :
a) couler une couche de formation de membrane asymétrique poreuse ;
b) sécher la couche de formation de membrane asymétrique poreuse pour former une membrane asymétrique poreuse sèche;
c) revêtir uniformément la membrane asymétrique poreuse sèche avec un revêtement comprenant une solution d'époxy-silicone diluée pour former une membrane revêtue, ladite solution d'époxysilicone diluée comprenant une résine d'époxy-silicone et un photocatalyseur à base d'onium dans un solvant organique non polaire à une concentration de 0,1 à 10 % en poids ; et
d) irradier au moyen d'un rayonnement UV et sécher la membrane revêtue pour produire la membrane revêtue d'époxysilicone.

2. Procédé suivant la revendication 1, dans lequel la couche de formation de membrane asymétrique poreuse comprend une membrane cellulosique choisie dans le groupe consistant en acétate de cellulose, diacétate de cellulose, triacétate de cellulose, propionate de cellulose, butyrate de cellulose, cyanoéthylate de cellulose, méthacrylate de cellulose et leurs mélanges, ou bien
comprend un polymère choisi dans le groupe consistant en polysulfone, polyéthersulfone, polyamide, polyimide, nitrate de cellulose, polyuréthanne, polycarbonate, polystyrène et leurs mélanges.

3. Procédé suivant la revendication 1, dans lequel la couche de formation de membrane asymétrique poreuse a une épaisseur de pellicule inférieure à 1000 angströms et la couche de formation de membrane asymétrique poreuse a une sélectivité de 0,5 à 15, la sélectivité d'une membrane pour séparer l'une de l'autre deux entités gazeuses A et B étant définie par le rapport de leurs perméances des gaz dans cette membrane.

4. Procédé suivant la revendication 1, dans lequel la solution d'époxysilicone diluée comprend un mélange à base d'époxysilicone formé d'une résine d'époxysilicone et d'un photocatalyseur à base d'onium, en un rapport de 1-4 parties de photocatalyseur à base d'onium pour 100 parties de résine d'époxysilicone.

5. Procédé de séparation sur membrane utilisant la membrane préparée suivant l'une quelconque des revendications 1 à 4 comprenant une couche de formation de membrane asymétrique poreuse comportant un revêtement uniforme d'époxy-silicone pour la séparation d'un constituant pouvant traverser à partir d'un courant d'alimentation comprenant le constituant pouvant traverser et un gaz naturel, ledit procédé comprenant le passage du courant d'alimentation dans des conditions efficaces jusqu'à une zone de séparation de membrane contenant une couche de membrane asymétrique poreuse revêtue d'un revêtement uniforme d'époxysilicone durcissable par UV et la récupération d'un courant de perméat enrichi en le constituant pouvant traverser par rapport au courant d'alimentation, et un courant de non perméat appauvri en constituant pouvant traverser par rapport au courant d'alimentation.

6. Procédé suivant la revendication 5, dans lequel les conditions efficaces comprennent une température de séparation inférieure à 70°C.

7. Procédé suivant la revendication 6, dans lequel le constituant pouvant traverser est choisi dans le groupe consistant en dioxyde de carbone, hydrogène sulfuré, eau et leurs mélanges.
